# EUROPÄISCHE PATENTSCHRIFT

(11) **EP 0 464 428 B1**
(45) Veröffentlichungstag und Bekanntmachung des Hinweises auf die Patenterteilung: **12.03.1997**
(21) Anmeldenummer: 91109811.9
(22) Anmeldetag: 14.06.1991
(51) Int. Cl.: B65D 85/672, B65D 19/12

(54) **Wiederverwendbare Transport- und Verpackungseinrichtung**
Reusable transport and packaging device
Dispositif de transport et d'emballage réutilisable

(30) Priorität: 22.06.1990 DE 9006964 U
(43) Veröffentlichungstag der Anmeldung: 08.01.1992
(73) Patentinhaber: HOECHST AKTIENGESELLSCHAFT, 65926 Frankfurt am Main (DE)
(72) Erfinder: Gleffe, Klaus, W-6204 Taunusstein-Wehen (DE); Reichert, Helmut, W-6222 Geisenheim-Johannisberg (DE); Heusel, Thomas, W-6200 Wiesbaden (DE)

(56) Entgegenhaltungen:
- EP-A- 0 401 506
- DE-U- 7 128 753
- GB-A- 1 299 219
- US-A- 4 258 631

## Beschreibung

Die Erfindung betrifft eine wiederverwendbare Transport- und Verpackungseinrichtung für den schonenden Transport von mechanisch empfindlichem Rollengut nach dem ersten Teil des Anspruchs 1 und wie aus GB-A 1 299 219 bekannt.

Danach ist eine zusammenklappbare Palette mit einem rechteckigen Basisrahmen und Stützrahmen bekannt, die aus einer vertikalen Arbeitsstellung in eine horizontale Stapelstellung umklappbar sind. Hierzu sind die Stützrahmen mit ihren Enden über Scharniere an Stützbeinen angelenkt. Die Sützbeine sind über den Basisrahmen hinaus nach oben verlängert, so daß die Scharniere oberhalb des Basisrahmens angebracht sind und die in die horizontale Stapelstellung umgeklappten Stützen im Abstand und parallel zu den Längsseitend des Basisrahmens verlaufen, jedoch nicht auf dem Basisrahmen aufliegen.

Aus der DE-C - 38 08 064 sind bereits Transport- und Verpackungshilfen bekannt, bei denen mit Hilfe sogenannter Stirnwände zylindrische Packgüter, z.B. maschinell hergestellte Rollen, insbesondere Großrollen, von flächenhafter Ware, wie Papier, Gewebe oder Folien aus Metall oder Kunststoff, in eine mehr oder weniger handhabbare bzw. stapelbare Form gebracht werden, um den Transport vom Hersteller zum Weiterverarbeiter ohne nennenswerte mechanische Beschädigungen zu überstehen. Diese Hilfsmittel erfüllen zwar ihren Einsatzzweck, stellen aber immer noch ein relativ großes Verpackungsmaterialvolumen dar, das nach dem einmaligen, mitunter auch mehrmaligen Gebrauch weggeworten wird und daher bei massenhaftem Anfall zu beträchtlichen Problemen bei der Beseitigung bzw. bei der Deponierung führt. Nach dem Willen der Hersteller und Anwender der Packgüter sollen diese Probleme durch den Wegfall oder die Wiederverwendbarkeit derartiger Verpackungsmaterialien gelöst werden.

In der US-A - 4,258,531 ist ein zusammenklappbares Gestell mit einem Grundrahmen und vertikalen Stützbeinen beschrieben. Die Beine besitzen einen Mittelteil mit Scharnieren an den Enden. Der Mittelteil der Beine ist nach innen in bezug auf den unteren Teil der Beine schwenkbar. Die Scharniere lassen jedoch kein Auswärtsschwenken des Mittelteils der Beine zu, da beide Scharniere so ausgelegt sind, daß nur ein Einwärtsschwenken möglich ist. Im vollständig zusammengeklappten Zustand der Beine verlaufen der Mittelteil und der obere Teil der Beine horizontal, wobei der obere Teil an der Unterseite des Mittelteils anliegt. Ein Verschwenken des oberen Teils nach außen, so daß der obere Teil auf der Oberseite des Mittelteils zum Anliegen käme, ist wegen der Ausgestaltung der Scharniere nicht möglich und auch nicht beabsichtigt.

Das aus der DE-U 71 28 753 bekannte Transport- und Stapelgestell für Rollen weist vier Vertikalstützen auf, zwischen denen Längsträger angeordnet sind, die Bohrungen aufweisen. Querträger werden mittels Zapfen, die in diese Bohrungen eingreifen, zwischen den Längsträgern angebracht und haben halbkreisförmige Aussparungen bzw. Einkerbungen, die rohrförmige Achsen der Rollen aufnehmen. Es sind weder Scharniere noch Gelenke für die Vertikalstützen, Längs- und Querträger vorgesehen.

Soweit die bekannten Transport- und Stapeleinrichtungen zusammenklappbar sind, liegen die zusammengeklappten Stützrahmen nicht dicht aufeinander oder auf dem Basisrahmen auf, vielmehr weisen sie noch erhebliche Abstände voneinander auf.

Aufgabe der Erfindung ist es, eine wiederverwendbare Transport- und Verpackungseinrichtung für großformatiges Rollengut zu schaffen, die in ihrer Arbeitstellung stabil ist und bei Nichtgebrauch stapelbar ist, wobei das Volumen der Einrichtung in der Stapelstellung kleiner als das Volumen in der Arbeitsstellung sein soll und die zusammengeklappten Teile möglichst dicht, d.h. ohne Zwischenräume, aufeinanderliegen sollen.

Diese Aufgabe wird erfindungsgemäß mit der Merkmalskombination des Anspruchs 1 gelöst.

In Ausgestaltung der Erfindung sind an der Unterseite des Basisrahmens Abstandshalter in Form von Standbeinen angeordnet, deren Abmessungen so gewählt sind, daß ein Unterflurfahrzeug, wie ein Gapelstapler, die Einrichtung von ihrer Standfläche, ähnlich wie eine Palette, abheben kann.

Die Transport- und Verpackungseinrichtung als solche besteht aus formstabilem Material, das gegen mechanische Einwirkungen unempfindlich ist, beispielsweise aus Metall.

Das Merkmal einstückig soll im Rahmen der vorliegenden Erfindung bedeuten, daß die Transport- und Verpackungseinheit in sich eine abgeschlossene Einrichtung bildet, bei der mehrere Einzelelemente zwar gegeneinander beweglich und miteinander verbunden sind, aber dennoch nicht durch einfache Handgriffe voneinander trennbar sind.

In zweckmäßiger Weise sind mittig auf Querstreben der Stützen Halterungen zur lagefesten Fixierung des Rollenguts angeordnet, die sich diametral gegenüberliegen. Die weiteren Gelenke sind bevorzugt in der Mitte der Stützen angebracht und die Gesamtlänge der Stützen ist kleiner/gleich der Länge der Längsseiten des Basisrahmens.

In weiterer Ausgestaltung der Einrichtung sind die Stabilisierungsschienen mit einem Ende am Kopfende der einen Stütze drehbar befestigt und mit ihrem anderen Ende am Kopfende der anderen Stütze einhängbar. In der Stapellage der Einrichtung sind dann die Stabilisierungsschienen ausgehängt und liegen an den zweifach umgeklappten Stützen an und sind die um die Gelenke und die weiteren Gelenke verschwenkten Stützen auf den Basisrahmen umgeklappt.

Die Formgebung der Einrichtung nach der Erfindung ermöglicht es, daß eine Anzahl von zusammengeklappten Einrichtungen übereinander stapelbar sind, ohne daß die Gefahr eines Verrutschens oder Einstürzens des Stapels gegeben ist.

Mit den im kopfseitigen Bereich der Transport- und Verpackungseinrichtung angebrachten Stabilisierungsschienen wird die Stellung der gegenüberliegenden Stützen zueinander zur besseren Stabilisierung der gesamten Transport- und Verpackungseinrichtung fixiert.

Die Transport- und Verpackungseinrichtung ist sowohl in beladenem Zustand wie in entladenem und zusammengelegtem Zustand stapelbar, das bedeutet, daß geeignete Ausnehmungen und Überstände im Bereich des Kopfteiles und des Basisrahmens beziehungsweise der Abstandshalter vorgesehen sind, mit deren Hilfe ein gegen Verrutschen oder Einsturz gesichertes Übereinandertürmen einzelner Transport- und Verpackungseinrichtungen ausführbar ist.

Die Erfindung wird nachfolgend beispielhaft anhand der beigefügten Zeichnungen näher erläutert.
- Figur 1: zeigt eine beladene Transport- und Verpackungseinrichtung nach der Erfindung in perspektivischer Darstellung,
- Figur 2: zeigt eine entladene Transport- und Verpackungseinrichtung in teilweise zusammengeklappter Konfiguration in perspektivischer Darstellung, und
- Figur 3: zeigt eine entladene Transport- und Verpackungseinrichtung in vollständig zusammengeklappter Konfiguration in perspektivischer Darstellung und andeutungsweise übereinandergestapelte, vollständig zusammengeklappte Einrichtungen.

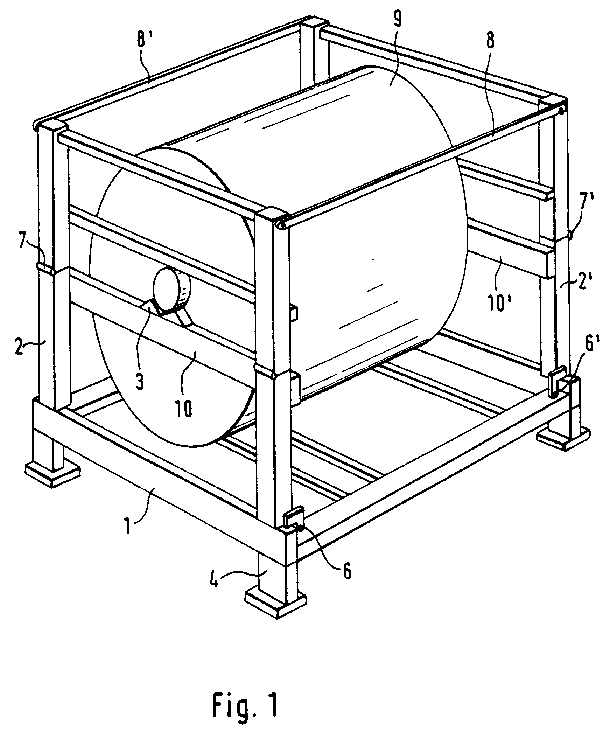

Im einzelnen ist in Figur 1 ein Basisrahmen 1 zu erkennen, an dessen Querseiten Stützen 2 und 2' angeordnet sind. Im Bereich der Stützen 2, 2' sind mittig prismatische eingekerbte Halterungen 3, 3' auf Querstreben 10, 10' angeordnet, mit denen das Rollengut 9 ortsfest fixiert wird. Unterhalb des Basisrahmens 1 befinden sich Abstandshalter 4, damit die Transport- und Verpackungseinrichtung mit Hilfe von geeigneten Hebemechanismen, wie Gabelstapler, leichter bewegt werden kann. Ferner sind in Figur 1 Gelenke 6 und 6' dargestellt, über die die Stützen 2 und 2' mit dem Basisrahmen 1 verbunden sind. Oberhalb der Halterungen 3, 3' sind an den Stützen 2 und 2' weitere Gelenke 7 und 7' angebracht. Im kopfseitigen Bereich weist die in Figur 1 dargestellte Transport- und Verpackungseinrichtung Stabilisierungsschienen 8 und 8' auf.

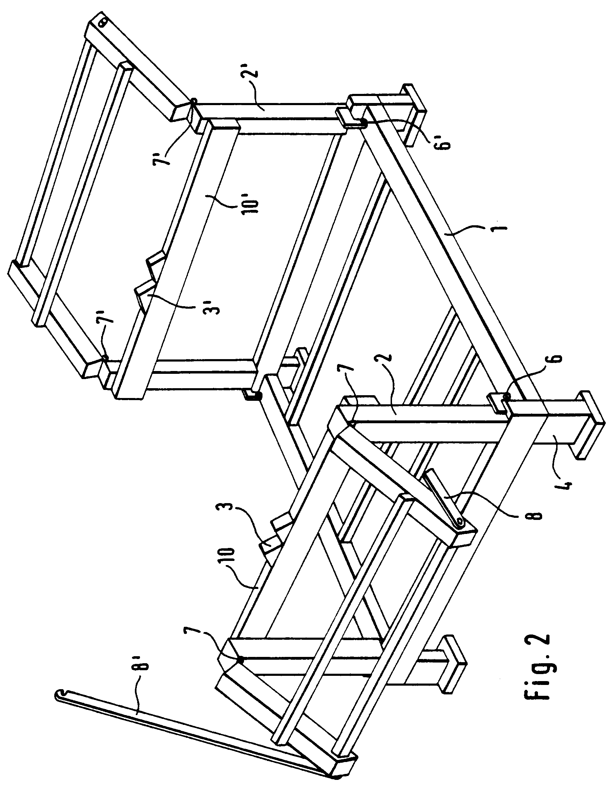

In Figur 2 beziehen sich prinzipiell gleiche Bezugsziffern auf gleiche Elemente wie in Figur 1. Zusätzlich zu Figur 1 ist in Figur 2 die mittig im Bereich der Stütze 2' angeordnete Halterung 3' erkennbar. In dieser Darstellung sind die oberen Teile der Stützen 2 und 2' um die weiteren Gelenke 7 und 7' nach außen umgeklappt. Die Stabilisierungsschienen 8 und 8' sind zu diesem Zweck an dem oberen Teil der Stütze 2' ausgehängt worden, sie sind jedoch beweglich, nämlich schwenkbar, aber untrennbar mit der Stütze 2 verbunden.

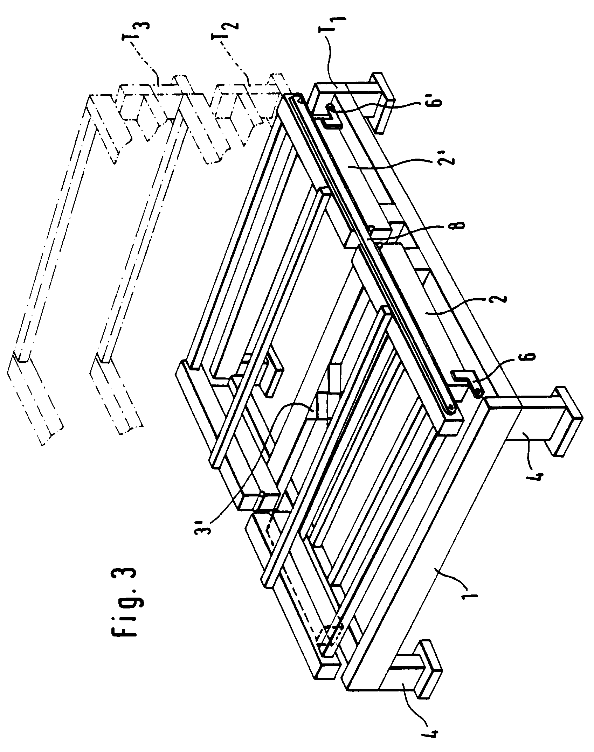

Auch in Figur 3 weisen gleiche Bezugsziffern auf gleiche Elemente wie in den Figuren 1 und 2 hin. In dieser Darstellung wird deutlich, daß die Transport- und Verpackungseinrichtung in vollständig zusammengeklappter Form eine sehr flache Konfiguration einnimmt. Unvollständig und nur andeutungsgemäß sind weitere Transport- und Verpackungseinrichtungen T₂ und T₃ dargestellt, die in vollständig zusammengeklappter Konfiguration übereinandergestapelt auf der untersten Einrichtung T₁ aufliegen.

## Patentansprüche

1. Wiederverwendbare Transport- und Verpackungseinrichtung für den schonenden Transport von mechanisch empfindlichem Rollengut mit einem quaderförmigen Rahmengestell, bestehend aus einem rechteckigen Basisrahmen (1) und an den Querseiten des Basisrahmens angelenkten Stützrahmen (2, 2'), die bis zu 90° aus einer Stellung parallel oberhalb des Basisrahmens in eine senkrechte Stellung verschwenkbar sind, wobei parallel zu den Längsseiten des Basisrahmens (1) verlaufende Stabilisierungsschienen (8, 8') die aufgerichteten Stützrahmen (2, 2') miteinander lösbar verbinden, dadurch gekennzeichnet, daß die Stützrahmen (2, 2') durch weitere Gelenke (7, 7') in einen oberen und unteren Teil unterteilt sind und der obere Teile in bezug auf den unteren Teil ausschließlich nach außen umklappbar ist, wobei ein Ende jeder Stabilisierungsschiene in den gegenüberliegenden oberen Teil des Stützrahmens (2') lösbar eingehängt ist.

2. Transport- und Verpackungseinrichtung nach Anspruch 1, dadurch gekennzeichnet, daß die Stützen (2, 2') um Gelenke (6, 6') an den einen Enden der Stützen auf den Basisrahmen (1) klappbar sind, und daß die Stützen durch weitere Gelenke (7, 7') unterteilt sind, wobei die oberen Stützenteile um diese weiteren Gelenke (7, 7') wegklappbar sind.

3. Transport- und Verpackungseinrichtung nach Anspruch 1, dadurch gekennzeichnet, daß an der Unterseite des Basisrahmens (1) Abstandshalter (4) in Form von Standbeinen angeordnet sind, deren Abmessungen so gewählt sind, daß ein Unterflurfahrzeug die Einrichtung von ihrer Standfläche, ähnlich wie eine Palette, anheben kann.

4. Transport- und Verpackungseinrichtung nach den Ansprüchen 1 bis 3, dadurch gekennzeichnet, daß der Basisrahmen (1), die Stützen (2, 2'), die Abstandshalter (4) und die Stabilisierungsschienen (8, 8') aus einem formstabilen Material wie Metall bestehen.

5. Transport- und Verpackungseinrichtung nach Anspruch 1, dadurch gekennzeichnet, daß mittig auf Querstreben (10, 10') der Stützen (2, 2') Halterungen (3, 3') zur lagefesten Fixierung des Rollenguts (9) angeordnet sind, die sich diametral gegenüberliegen.

6. Transport- und Verpackungseinrichtung nach Anspruch 1, dadurch gekennzeichnet, daß jede Stabilisierungsschiene (8, 8') mit ihrem anderen Ende an dem oberen Teil des Stützrahmens (2) drehbar befestigt ist.

7. Transport- und Verpackungseinrichtung nach Anspruch 1, dadurch gekennzeichnet, daß die Stabilisierungsschienen (8, 8') mit einem Ende am Kopfende der einen Stütze (2) drehbar befestigt sind und mit ihrem anderen Ende am Kopfende der anderen Stütze (2') einhängbar sind.

8. Transport und Verpackungseinrichtung nach den Ansprüchen 1 bis 7, dadurch gekennzeichnet, daß in ihrer Stapellage die Stabilisierungsschienen (8, 8') von der Stütze (2') ausgehängt sind und an den zweifach umgeklappten Stützen (2, 2') anliegen und daß die um die Gelenke (6, 6') und die weiteren Gelenke (7, 7') verschwenkten Stützen (2, 2') auf den Basisrahmen (1) umgeklappt sind.

9. Transport- und Verpackungseinrichtung nach Anspruch 8, dadurch gekennzeichnet, daß eine Anzahl von zusammengeklappten Einrichtungen (T₁, T₂, T₃) übereinander stapelbar sind.

## Claims

1. A re-usable transport and packaging device for the careful transport of mechanically sensitive goods in the form of rolls, said device comprising a cuboid frame rack comprised of a rectangular base frame (1), and supporting frames (2, 2') which are fastened to the transverse sides of said base frame by means of a joint, it being possible for said supporting frames to be pivoted through an angle of up to 90° from a position above the base frame, in parallel alignment with the latter, into a vertical position, the erected supporting frames (2,2') being releasably connected by stabilizing rails (8, 8') which are in parallel alignment with the longitudinal sides of the base frame (1), characterized in that the supporting frames (2, 2') are subdivided into an upper and a lower part by further joints (7, 7') and in that the upper part can be pivoted towards the outside only, with respect to the lower part, with one end of each stabilizing rail being releasably hinged in the opposite upper part of the supporting frame (2').

2. The transport and packaging device as claimed in claim 1, characterized in that the supporting elements (2, 2') can be pivoted onto the base frame (1), about base joints (6, 6') provided at the lower ends of the supporting elements, and that the supporting elements are subdivided by further joints (7, 7'), it being possible to pivot the upper parts of the supporting elements about these further joints (7, 7').

3. The transport and packaging device as claimed in claim 1, characterized in that spacers (4) in the form of butt-ended legs are provided on the underside of the base frame (1), the length of these spacers being selected such that the device can be lifted off the ground by a fork-stacker, in a way similar to a pallet.

4. The transport and packaging device as claimed in any of claims 1 to 3, characterized in that the base frame (1), the supporting elements (2, 2'), the spacers (4) and the stabilizing rails (8, 8') are made of a dimensionally stable material, such as metal.

5. The transport and packaging device as claimed in claim 1, characterized in that holding elements (3, 3') for the stationary mounting of the goods in the form of rolls (9) are fastened centrally to transverse struts (10, 10') of the supporting elements (2, 2'), these holding elements (3, 3') being positioned diametrically opposite each other.

6. The transport and packaging device as claimed in claim 1, characterized in that the other end of each stabilizing rail (8, 8') is pivotally fastened to the upper part of the supporting frame (2).

7. The transport and packaging device as claimed in claim 1, characterized in that one end of the stabilizing rails (8, 8') is pivotally fastened to the upper end of one supporting element (2), whereas their other end is releasably fastened to the upper end of the other supporting element (2') by means of a hinge.

8. The transport and packaging device as claimed in any of claims 1 to 7, characterized in that when being stacked the stabilizing rails (8, 8') are unhinged from the supporting element (2') and rest against the supporting elements (2, 2') which are pivoted down twice, and that the supporting elements (2, 2') pivoted about the base joints (6, 6') and about the further joints (7, 7') are folded down onto the base frame (1).

9. The transport and packaging device as claimed in claim 8, characterized in that a plurality of folded-down devices (T₁, T₂, T₃) can be stacked on top of one another.

## Revendications

1. Dispositif de transport et d'emballage réutilisable, pour le transport soigneux de produits en rouleaux mécaniquement délicats, comprenant un cadre de châssis cubique composé d'un châssis de base rectangulaire (1) et de châssis de support (2, 2') articulés sur les côtés transversaux du châssis de base, pouvant être basculés d'un angle pouvant atteindre 90°, d'une position orientée parallèlement au châssis de base, au-dessus de celui-ci, en une position verticale, des rails stabilisateurs (8, 8') s'étendant parallèlement aux côtés longitudinaux du châssis de base (1) pour relier de façon démontable les châssis de support redressés (2, 2') l'un à l'autre, caractérisé en que les châssis de support (2, 2') sont divisés, par l'intermédiaire d'autres articulations (7, 7'), en une partie supérieure et une partie inférieure, et en ce que la partie supérieure peut être repliée exclusivement vers l'extérieur par rapport à la partie inférieure, une extrémité de chaque rail stabilisateur étant accrochée de façon démontable dans la partie supérieure du châssis de support opposé (2').

2. Dispositif de transport et d'emballage selon la revendication 1, caractérisé en ce que les supports (2, 2') peuvent être repliés sur le châssis de base (1) autour des articulations (6, 6') disposées à l'une des extrémités inférieures des supports, et que les supports sont divisés par l'intermédiaire d'autres articulations (7, 7'), les parties supérieures des supports pouvant être repliés autour de ces articulations supplémentaires (7, 7').

3. Dispositif de transport et d'emballage selon la revendication 1, caractérisé en ce que des entretoises (4) réalisées sous forme de pieds sont disposées à la face inférieure du châssis de base, leurs dimensions étant choisies de manière telle qu'un véhicule de manutention puisse soulever le dispositif de sa surface d'appui d'une manière similaire à une palette.

4. Dispositif de transport et d'emballage selon les revendications 1 à 3, caractérisé en ce que le châssis de base (1), les supports (2, 2'), les entretoises (4) et les rails stabilisateurs (8, 8') sont constitués d'une matière indéformable, telle que du métal.

5. Dispositif de transport et d'emballage selon la revendication 1, caractérisé en ce que des éléments de maintien (3, 3') destinés à assurer l'immobilisation du produit en rouleau (9) dans sa position sont disposés de façon centrale sur des barres transversales (10, 10') des supports (2, 2'), ces éléments étant diamétralement opposés l'un à l'autre.

6. Dispositif de transport et d'emballage selon la revendication 1, caractérisé en ce que l'autre extrémité de chaque rail stabilisateur (8, 8') est fixée de façon pivotante sur la partie supérieure du châssis de support (2).

7. Dispositif de transport et d'emballage selon la revendication 1, caractérisé en ce que l'une des extrémités des rails stabilisateurs (8, 8') est fixée de façon pivotante à l'extrémité de tête de l'un des supports (2), et que leur autre extrémité peut s'accrocher sur l'extrémité de tête de l'autre support (2').

8. Dispositif de transport et d'emballage selon les revendications 1 à 7, caractérisé en ce que, dans leur position d'empilage, les rails stabilisateurs (8, 8') sont décrochés du support (2') et reposent sur les supports (2, 2') pliés deux fois, et en ce que les supports (2, 2') repliés autour des articulations (6, 6') et autour des autres articulations (7, 7') sont rabattus sur le châssis de base (1).

9. Dispositif de transport et d'emballage selon la revendication 8, caractérisé en ce qu'un nombre de dispositifs repliés (T₁, T₂, T₃) peuvent être empilés les uns sur les autres.
